# EUROPÄISCHE PATENTSCHRIFT

(11) **EP 0 457 042 B1**
(45) Veröffentlichungstag und Bekanntmachung des Hinweises auf die Patenterteilung: **02.11.1994**
(21) Anmeldenummer: 91106090.3
(22) Anmeldetag: 17.04.1991
(51) Int. Cl.: F21M 7/00

(54) **Fahrzeugleuchte**
Vehicle lamp
Lampe de véhicule

(30) Priorität: 12.05.1990 DE 4015279
(43) Veröffentlichungstag der Anmeldung: 21.11.1991
(73) Patentinhaber: Hella KG Hueck & Co., 59552 Lippstadt (DE)
(72) Erfinder: Schürhoff, Konrad, W-4740 Oelde 1 (DE); Perrevoort, Jürgen, W-4831 Langenberg (DE)

(56) Entgegenhaltungen:
- DE-U- 7 400 819
- GB-A- 2 064 747
- GB-A- 2 088 543

## Beschreibung

Die Erfindung betrifft eine Fahrzeugleuchte, bestehend im wesentlichen aus einem Gehäuse, einer das Gehäuse nach vorn zur Lichtaustrittsrichtung abdeckenden Lichtscheibe und einer das Gehäuse nach hinten hin abschließenden Abdeckung, wobei die Abdeckung rastbar an dem Gehäuse befestigt ist, die Abdeckung unter Vorspannung mit dem Gehäuse verrastet ist und die Mittel zur Erzeugung der Vorspannung im Randbereich der Abdeckung angeordnet sind und am Gehäuse anliegen.

In dem DE-U-74 00 819 ist eine solche vorgespannte Verrastung der Abdeckung einer Fahrzeugleuchte beschrieben. Die hierin offenbarten Verspannungsmittel haben nur einen geringen Vorspannweg und damit nur eine geringe Vorspannkraft.

Es ist deshalb Aufgabe der Erfindung, die bekannten Vorspannmittel derart zu verbessern, daß die Abdeckung auch bei größeren Toleranzen mit Sicherheit klapper- und spielfrei sowie gegen ungewolltes Lösen mit dem Gehäuse verbunden ist.

Diese Aufgabe wird erfindungsgemäß dadurch gelöst, daß
- die Mittel zur Erzeugung der Vorspannung ösenförmige Federn sind, deren Enden nicht geschlossen sind,
- die beiden Enden mit dem Rand der Abdeckung verbunden sind,
- ein über den Rand der Seitenwandung hinausragender gewölbter Teil der ösenförmigen Federn sich auf dem Leuchtengehäuse abstützt,
- eine zwischen den beiden Enden und dem Rand der Abdeckung bestehende erste Verbindungsstelle und die Abstützungsstelle für die ösenförmigen Federn auf dem Gehäuse in einer Ebene liegen, zu welcher die ösenförmigen Federn einerseits freistehend sind und sich andererseits zu der zweiten Verbindungsstelle hin erstrecken.

Dadurch, daß die ösenförmigen Federn in einer in die Seitenwandung einer schalenförmigen Abdeckung eingebrachten, zum Gehäuse hin offene Aussparung angeordnet sind und die erste Verbindungsstelle etwa in der Hälfte des parallel zum Gehäuserand verlaufenden Randes dieser Aussparung liegt, ist ein hoher Anpreßdruck bei einem großen Vorspannungsweg gegeben. Dieses wird noch dadurch unterstützt, daß die zweite Verbindungsstelle an einer Ausschnittskante angeordnet ist, die zur Ausschnittskante der ersten Verbindungsstelle senkrecht verläuft.

Besonders vorteilhaft erweisen sich die Aussparungen in den Seitenwandungen insofern, daß keine Raumprobleme für die Federn entstehen und sich dies fertigungstechnisch unproblemmatisch berücksichtigen läßt.

Um den fertigungstechnischen Aufwand so klein wie möglich zu halten, ist es vorteilhaft, daß die Stärke der ösenförmigen Federn der Wandungsstärke der Abdeckung entspricht, und daß dabei die ösenförmigen Federn einen rechteckförmigen Materialquerschnitt aufweisen. Letzteres wirkt sich vorteilhaft auf die Seitenstabilität beim Zusammendrücken der Federn aus.

Weiterhin vorteilhaft ist, daß die ösenförmigen Federn mit dem gegen das Leuchtengehäuse gerichteten und gewölbt verlaufenden Teil in nutartigen Schlitzen eines metallischen Lampenträgers geführt sind, die innen in der schalenförmigen Abdeckung angeordnet sind und für eine Führung beim Einfedern sorgen.

Daß die ösenförmigen Federn auf am Leuchtengehäuse befindlichen Auflageböckchen sauber anliegen, ist vorteilhafterweise ebenfalls auf die rechteckige Querschnittsform der ösenförmigen Federn zurückzuführen. Mit den parallel zu den Auflageböckchen verlaufenden Anlageflächen, sorgen sie für eine linienförmig bis flächige Auflage, die die Vorspannung für die Verrastung verwackelfrei übertragen. Außerdem ist es möglich, über die Höhe der Auflageböckchen nachträglich Justierungen für den Sitz des Lampenträgers vorzunehmen.

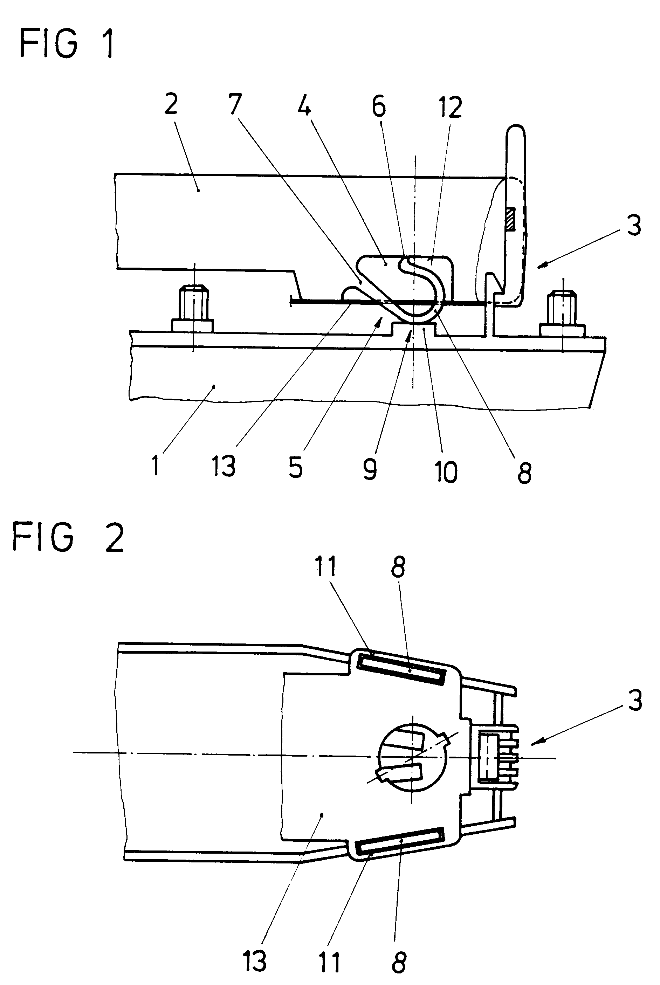

Die Zeichnung veranschaulicht ein vorteilhaftes Beispiel der Erfindung und zwar zeigen
Figur 1 eine Seitenansicht der ösenförmigen Feder in Einbaulage und
Figur 2 eine Ansicht auf den metallischen Lampenträger der Abdeckung im Bereich der ösenförmigen Federn.

Die Fahrzeugleuchte weist ein Gehäuse (1), eine dieses nach vorn hin abschließende Lichtscheibe (nicht gezeigt) und eine das Gehäuse (1) nach hinten hin abschließende Abdeckung (2) auf, in die ein Lampenträger (13) eingesetzt ist. Eine Verrastung (3) an einem Ende der Abdeckung (2) verbindet die Abdeckung (2) mit dem Gehäuse (1). In den sich gegenüberliegenden Seitenwandungen der Abdeckung (2) nahe der Verrastung (3) befinden sich Aussparungen (4) mit darin eingebetteten, ösenförmigen Federn (5). Die beiden Enden der ösenförmigen Federn (5) sind in einem ersten Verbindungsstelle (6) und einem zweiten Verbindungsstelle (7) mit dem Rand (12) der Aussparung (4) verbunden. Der gewölbte Teil (8) der ösenförmigen Federn (5) stützt sich in einer Abstützungsstelle (9) an Auflageböckchen (10) des Gehäuses (1) ab. Außerdem ragen die ösenförmigen Federn (5) mit dem gewölbten Teil (8) durch nutartige Schlitze (11) hindurch, die aus Freistanzungen des Lampenträgers (13) gebildet sind und die den ösenförmigen Federn (5) bei ihrem Federweg als Führung dienen.

## Patentansprüche

1. Fahrzeugleuchte, im wesentlichen bestehend aus einem Gehäuse, einer das Gehäuse nach vorn zur Lichtaustrittsrichtung hin abdeckenden Lichtscheibe und einer das Gehäuse nach hinten hin abschließenden Abdeckung, mit den Merkmalen:
a) die Abdeckung ist rastbar an dem Gehäuse befestigt,
b) die Abdeckung ist unter Vorspannung mit dem Gehäuse verrastet,
c) die Mittel zur Erzeugung der Vorspannung sind im Randbereich der Abdeckung angeordnet und liegen an dem Gehäuse an,
dadurch gekennzeichnet, daß
d) die Mittel zur Erzeugung der Vorspannung ösenförmige Federn (5) sind, deren Enden nicht geschlossen sind,
e) die beiden Enden mit dem Rand (12) der Abdeckung (2) verbunden sind,
f) ein über den Rand der Seitenwandung hinausragender gewölbter Teil (8) der ösenförmigen Federn (5) sich auf dem Gehäuse (1) abstützt,
g) eine zwischen den beiden Enden und dem Rand (12) der Abdeckung (2) bestehende erste Verbindungsstelle (6) und die Abstützungsstelle (9) för die ösenförmigen Federn (5) auf dem Gehäuse (1) in einer Ebene liegen, zu welcher die ösenförmigen Federn (5) einerseits freistehend sind und sich andererseits zu der zweiten Verbindungsstelle (7) hin erstrecken.

2. Fahrzeugleuchte nach Anspruch 1, dadurch gekennzeichnet, daß die ösenförmigen Federn (5) in einer in die Seitenwandung einer schalenförmigen Abdeckung (2) eingebrachten, zum Gehäuse (1) hin offenen Aussparung (4) angeordnet sind und die erste Verbindungsstelle (6) etwa in der Hälfte des parallel zum Gehäuserand verlaufenden Randes (12) dieser Aussparung (4) liegt.

3. Fahrzeugleuchte nach Anspruch 1 und 2, dadurch gekennzeichnet, daß die zweite Verbindungsstelle (7) an einer Ausschnittskante angeordnet ist, die zur Ausschnittskante der ersten Verbindungsstelle (6) senkrecht verläuft.

4. Fahrzeugleuchte nach einem der vorstehenden Ansprüche, dadurch gekennzeichnet, daß die ösenförmigen Federn (5) mit dem gegen das Gehäuse (1) gerichteten und gewölbt verlaufenden Teil (8) in nutartigen Schlitzen (11) eines metallischen Lampenträgers geführt sind, die innen in der schalenförmigen Abdeckung (2) angeordnet sind.

5. Fahrzeugleuchte nach einem der vorstehenden Ansprüche, dadurch gekennzeichnet, daß die Materialstärke der ösenförmigen Federn (5) der Wandungsstärke der Abdeckung (2) entspricht.

6. Fahrzeugleuchte nach einem der vorstehenden Ansprüche, dadurch gekennzeichnet, daß die ösenförmigen Federn (5) einen rechteckförmigen Materialquerschnitt aufweisen.

7. Fahrzeugleuchte nach einem der vorstehenden Ansprüche, dadurch gekennzeichnet, daß die ösenförmigen Federn (5) auf am Gehäuse (1) befindlichen Auflageböckchen (10) aufliegen.

## Claims

1. A vehicle lamp consisting essentially of a housing, a lamp lens covering the housing at the front in the direction of light emergence and a cover closing the housing at the back, with the following features:
a) the cover is latchably secured to the housing,
b) the cover is latched to the housing under prestress,
c) the means for producing the prestress are disposed in the edge region of the cover and are seated against the housing,
characterised in that
d) the means for producing the prestress are loop-shaped springs (5), the ends of which are not closed,
e) the two ends are joined to the edge (12) of the cover (2),
f) a curved part (8) of the loop-shaped springs (5), which projects beyond the edge of the sidewall, is supported on the housing (1),
g) a first junction point (6), which is present between the two ends and the edge (12) of the cover (2), and the support point (9) for the loop-shaped springs (5) on the housing (1) are situated in a plane in which the loop-shaped springs (5) are firstly self-supporting and secondly extend towards the second junction point (7).

2. A vehicle lamp according to claim 1, characterised in that the loop-shaped springs (5) are disposed in a recess (4) built into the sidewall of a dish-shaped cover (2) and open towards the housing (1), and the first junction point (6) is situated approximately in the middle of the edge (12), which extends parallel to the housing edge, of this recess (4).

3. A vehicle lamp according to claims 1 and 2, characterised in that the second junction point (7) is disposed on a sectional edge which extends perpendicularly to the sectional edge of the first junction point (6).

4. A vehicle lamp according to any one of the preceding claims, characterised in that the loop-shaped springs (5) are guided with their curved part (8) which is oriented towards the housing (1) in channel-like slots (11) of a metal bulb holder, which slots are disposed inside the dish-shaped cover (2).

5. A vehicle lamp according to any one of the preceding claims, characterised in that the material thickness of the loop-shaped springs (5) corresponds to the wall thickness of the cover (2).

6. A vehicle lamp according to any one of the preceding claims, characterised in that the loop-shaped springs (5) have a rectangular material cross-section.

7. A vehicle lamp according to any one of the preceding claims, characterised in that the loop-shaped springs (5) rest on raised support areas (10) situated on the housing (1).

## Revendications

1. Feu de véhicule, comprenant essentiellement un boîtier, une plaque d'éclairage qui recouvre le boîtier vers l'avant dans la direction de sortie de la lumière et un capot qui referme le boîtier vers l'arrière, dans lequel:
(a) le capot est fixé par encliquetage sur le boîtier,
(b) le capot est encliqueté sous précontrainte sur le boîtier,
(c) les moyens pour produire la précontrainte sont agencés dans la région de bordure du capot et sont appliqués contre le boîtier,
caractérisé en ce que
(d) les moyens pour produire la précontrainte sont des ressorts (5) en forme de boucle, dont les extrémités ne sont pas refermées,
(e) les deux extrémités sont reliées à la bordure (12) du capot (2),
(f) une partie bombée (8) des ressorts en forme de boucle (5), qui dépasse au-delà de la bordure de la paroi latérale, s'appuie sur le boîtier (1),
(g) un premier emplacement de liaison (6), qui existe entre les deux extrémités et la bordure (12) du capot (2), et l'emplacement d'appui (9) pour les ressorts en forme de boucle (5) sur le boîtier (1) sont situés dans un plan par rapport auquel les ressorts en forme de boucle (5) dépassent d'une part librement, et s'étendent d'autre part en direction du second emplacement de liaison (7).

2. Feu de véhicule selon la revendication, caractérisé en ce que les ressorts en forme de boucle (5) sont agencés dans un évidement (4) qui est ménagé dans la paroi latérale du capot (2) en forme de coquille, et qui est ouvert en direction du boîtier (1), et en ce que le premier emplacement de liaison (6) est situé approximativement dans la moitié de la bordure (12) de cet évidement (4) qui s'étend parallèlement à la bordure du boîtier.

3. Feu de véhicule selon l'une ou l'autre des revendications 1 et 2, caractérisé en ce que le second emplacement de liaison (7) est agencé sur une arête d'une découpe qui s'étend perpendiculairement à l'arête de la découpe du premier emplacement de liaison (6).

4. Feu de véhicule selon l'une quelconque des revendications précédentes, caractérisé en ce que les ressorts en forme de boucle (5) sont guidés par leur partie bombée (8) dirigée contre le boîtier (1) dans des fentes (11) analogues à des gorges d'un porte-lampe métallique, lesdites gorges étant agencées à l'intérieur dans le capot (2) en forme de coquille .

5. Feu de véhicule selon l'une quelconque des revendications précédentes, caractérisé en ce que l'épaisseur du matériau des ressorts en forme de boucle (5) correspond à l'épaisseur de la paroi du capot (2).

6. Feu de véhicule selon l'une quelconque des revendications précédentes, caractérisé en ce que les ressorts en forme de boucle (5) présentent une section de matériau rectangulaire.

7. Feu de véhicule selon l'une quelconque des revendications précédentes, caractérisé en ce que les ressorts en forme de boucle (5) sont appliqués contre des plots d'appui (10) situés sur le boîtier (1).
